# EUROPEAN PATENT APPLICATION

(11) **EP 1 365 582 A1**
(43) Date of publication of application: **26.11.2003**
(21) Application number: 03076680.2
(22) Date of filing: 25.02.1999
(51) Int. Cl.: H04N 5/445

(54) **Program guide system with targeted advertising**

(30) Priority: 04.03.1998 US 34939
(62) Divisional of application: 02011161.3
(71) Applicant: United Video Properties, Inc., Tulsa, OK 74136 (US)
(72) Inventor: Knudson, Edward B., Littleton Colorado 80127 (US); Ellis, Michael D., Boulder Colorado 8030 (US); Knee, Robert A., Lansdale Pennsylvania 19446 (US); Carpenter, Kenneth F. Jr., Mount Laurel New Jersey 08054 (US)
(74) Representative: Neobard, William John

(57) **Abstract**

An interactive television program guide system is provided in which targeted advertisements may be presented to a user and targeted actions taken in the program guide based on the user's interests. The program guide monitors the user's interactions with the program guide to determine the user's interests. Interactions that may be monitored include interactions that indicate the categories of programming that interest the user (eg movies, sports, children's programming etc), setting a reminder for a program, purchasing a program, requesting information on a program, browsing program listings for a particular time or channel, etc.

## Description

### Background of the Invention

This invention relates to interactive television program guides, and more particularly, to techniques for presenting targeted advertising to users of such television program guides.

Cable, satellite, and broadcast television systems provide viewers with a large number of television channels. Viewers have traditionally consulted printed television program schedules to determine the programs being broadcast at a particular time. More recently, interactive electronic television program guides have been developed that allow television program information to be displayed on a viewer's television.

Interactive program guides are typically implemented on set-top boxes. Such program guides allow users to view television program listings in different display formats. For example, a user may instruct the program guide to display a grid of program listings organized in a channel-ordered or a time-ordered list. Users may also search and sort program listings by theme (e.g., movies, sports, etc.) or by title (i.e, alphabetically). A user may obtain additional information for a program by placing a highlight region on a desired program listing and pressing an "info" button. The user may purchase a pay program from the program guide by placing the highlight region on a program listing and pressing an "OK" button. Some systems allow the user to select a program for recording by placing the highlight region on a program listing and pressing a "record" button.

The user's interactions with the program guide are indicative of the user's interests. For example, if the user purchases a pay-per-view movie, making that purchase shows that the user is interested in movies of that type. Searching for program listings in the category "sports" indicates that the user is interested in sports. Although the user's interactions with the program guide indicate the user's interests, previously known program guide systems have not monitored or used this information. As a result, previous systems have not been able to present targeted advertisements to users or to take targeted actions in the program guide based on the preferences the users have expressed by their interactions with the program guide.

It is therefore an object of the present invention to provide a program guide system that determines a user's interests by monitoring the user's interactions with the program guide and that presents targeted advertising or takes a targeted action in the program guide based on the user's interests.

It is also an object of the invention to provide an arrangement for monitoring the effectiveness of targeted advertisements and targeted program guide actions.

### Summary of the Invention

These and other objects of the invention are accomplished in accordance with the principles of the present invention by providing a system having an interactive television program guide that monitors the user's interactions with the program guide to determine the user's interests. The program guide may display targeted advertising or take a targeted action in the program guide based on this determination of the user's interests.

Targeted advertisements may contain text, graphics, or video. Targeted advertisements may also be active objects containing various user-selectable options. For example, a targeted advertisement may allow the user to request that additional information on a product be mailed to the user's home, may allow the user to purchase a product, or may allow the user to view additional information on a product using the program guide.

Targeted actions that may be taken in the program guide include setting program reminders and offering a pay-per-view program for purchase. For example, if the program guide determines that the user is interested in sports programming, the program guide may automatically set a program reminder for a particular sports program. Alternatively, the program guide could provide the user with an opportunity to set such a reminder, but would not set the reminder automatically. Another targeted action that may be taken involves presenting the user with an option to purchase a pay-per-view event. For example, if it is determined that a user has an interest in boxing, the program guide may present the user with an opportunity to purchase a pay-per-view boxing event.

The targeted advertisements that are presented and the targeted actions that are taken in the program guide may be monitored using a special monitoring version of the program guide. The monitoring version of the program guide may be distributed to a representative group of users. Periodically, the monitoring version of the program guide transmits data relating to the frequency with which certain advertisements are displayed and actions are taken to a central facility for analysis.

Further features of the invention, its nature and various advantages will be more apparent from the accompanying drawings and the following detailed description of the preferred embodiments.

### Brief Description of the Drawings

FIG. 1 is a diagram of a system in which an interactive television program guide is implemented in accordance with the present invention.
FIG. 2 is a diagram of a system similar to the system of FIG. 1 showing how servers may be located at network nodes in accordance with the present invention.
FIG. 3 is a flow chart of steps involved in determining a user's interests and displaying targeted advertising or taking a targeted action in the program guide in accordance with the present invention.
FIG. 4 is a depiction of an illustrative screen for a browse feature in accordance with the present invention.
FIG. 5 is a depiction of an illustrative set reminder screen in accordance with the present invention.
FIG. 6 is a depiction of an illustrative reminder screen in accordance with the present invention.
FIG. 7 is a depiction of an illustrative by time program listings screen in accordance with the present invention.
FIG. 8 is a depiction of an illustrative select start time screen in accordance with the present invention.
FIG. 9 is a depiction of an illustrative order review screen in accordance with the present invention.
FIG. 10 is a depiction of an illustrative targeted pay-per-view ordering screen in accordance with the present invention.
FIG. 11 is a depiction of an illustrative targeted set reminder screen in accordance with the present invention.
FIG. 12 is a depiction of an illustrative navigator screen containing a targeted advertisement in accordance with the present invention.
FIG. 13 is a depiction of an illustrative by channel program listings screen in accordance with the present invention.
FIG. 14 is a depiction of an illustrative program promotion screen in accordance with the present invention.
FIG. 15 is a depiction of an illustrative pay-per-view movie screen and an illustrative corresponding pay-per-view information screen in accordance with the present invention.
FIG. 16 is a diagram of an illustrative monitoring process in accordance with the present invention.
FIG. 17 is a depiction of an illustrative television screen containing a flip region in accordance with the present invention.
FIG. 18 is a depiction of an illustrative navigator screen containing a selectable targeted advertisement in accordance with the present invention.
FIG. 19 is a depiction of an illustrative movie listings screen in accordance with the present invention.
FIG. 20 is a depiction of an illustrative movie information screen in accordance with the present invention.
FIG. 21 is a depiction of an illustrative pay-per-view movies listings screen in accordance with the present invention.
FIG. 22 is a depiction of an illustrative arrangement for displaying an advertisement on top of a currently displayed television channel in accordance with the present invention.
FIG. 23 is a flow chart showing steps involved in an illustrative approach for displaying an advertisement over a selected program in accordance with the present invention.
FIG. 24 is a depiction of an illustrative targeted advertisement presented in the form of an active object in accordance with the present invention.
FIG. 25 is a flow chart of steps involved in an illustrative approach for displaying relatively small advertisements that the user may select to view additional information in the form of a full-screen video advertisement in accordance with the present invention.
FIG. 26 is a diagram of a data structure that may be used to identify the content of targeted advertisements or actions in accordance with the present invention.
FIG. 27 is a diagram of a data structure that may be used to identify the content of television programs in accordance with the present invention.
FIG. 28 is a flow chart showing steps involved in monitoring which targeted advertisements are displayed to the user and which targeted actions are taken in the program guide in accordance with the present invention.
FIG. 29 is a schematic diagram of a data record of a type suitable for collecting monitoring data in accordance with the present invention.

### Detailed Description of the Preferred Embodiments

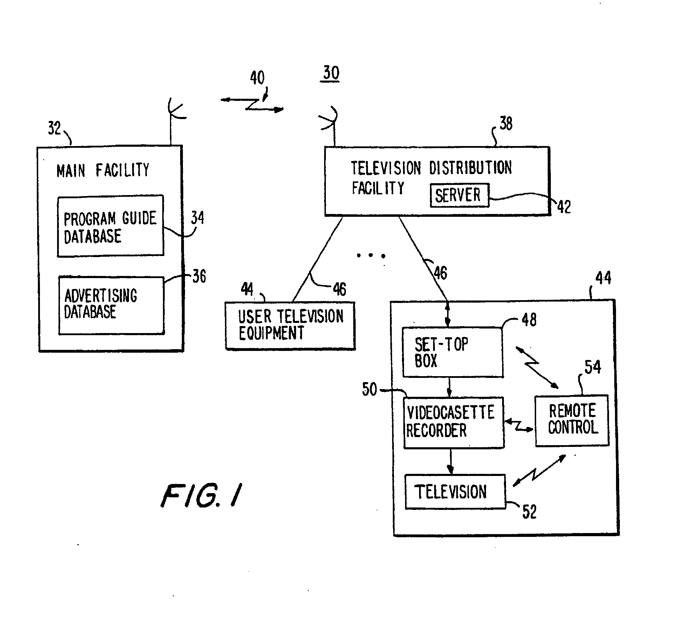

An illustrative program guide system 30 in accordance with the present invention is shown in FIG. 1. Main facility 32 contains a program guide database 34 for storing program guide information such as television program guide listings data, pay-per-view ordering information, television program promotional information, etc. Main facility 32 also contains an advertising database 36 for storing advertising information. Information from databases 34 and 36 may be transmitted to television distribution facility 38 via communications link 40. Link 40 may be a satellite link, a telephone network link, a cable or fiber optic link, a microwave link, a combination of such links, or any other suitable communications path. If it is desired to transmit video signals (e.g., for advertising and promotional videos) over link 40 in addition to data signals, a relatively high bandwidth link such as a satellite link is generally preferable to a relatively low bandwidth link such as a telephone line.

Television distribution facility 38 is a facility for distributing television signals to users, such as a cable system headed, a broadcast distribution facility, or a satellite television distribution facility.

The program guide information transmitted by main facility 32 to television distribution facility 38 includes television program listings data such as program times, channels, titles, descriptions, etc. Transmitted program information also includes pay program data such as pricing information for individual programs and subscription channels, time windows for ordering programs and channels, telephone numbers for placing orders that cannot be impulse ordered, etc. The advertising information transmitted by main facility 32 to television distribution facility 38 includes text, graphics, and video advertisements for various products and services. If desired, some of the program guide and advertising information may be provided using data sources at facilities other than main facility 32. For example, data related to pay program order processing (e.g., billing data and the like) may be generated by an order processing and billing system that is separate from main facility 32 and separate from television distribution facility 38. Similarly, advertising information may be generated by an advertising facility that is separate from main facility 32 and television distribution facility 38.

Regardless of its source, advertising information may be maintained on a server 42 within television distribution facility 38 if desired. Server 42 may be capable of handling text, graphics, and video.

Television distribution facility 38 distributes program guide and advertising information to the user television equipment 44 of multiple users via communications paths 46. Program guide data may be distributed over an out-of-band channel on paths 46. Advertising information may be distributed using any of a number of suitable techniques. For example, text and graphics advertisements may be distributed over an out-of-band channel using an out-of-band modulator. Video advertisements may also be distributed in this way, although large quantities of video information may be more efficiently distributed using one or more digital channels on path 46. Such digital channels may also be used for distributing text and graphics.

Each user has a receiver, which is typically a set-top box such as set-top box 48, but which may be other suitable television equipment into which circuitry similar to set-top-box circuitry has been integrated. Program guide data is distributed to set-top boxes 48 periodically. Television distribution facility 38 may also poll set-top boxes 48 periodically for certain information (e.g., pay program account information or information regarding programs that have been purchased and viewed using locally-generated authorization techniques). Main facility 32 preferably contains a processor to handle information distribution tasks. Each set-top box 48 preferably contains a processor to handle tasks associated with implementing a program guide application on the set-top box 48. Television distribution facility 38 may contain a processor for tasks associated with monitoring a user's interactions with the interactive program guide implemented on set-top boxes 48 and for handling tasks associated with the distribution of program guide and advertising information.

Each set-top box 48 is typically connected to an optional videocassette recorder 50 so that selected television programs may be recorded. Each videocassette recorder 50 is connected to a television 52. To record a program, set-top box 48 tunes to a particular channel and sends control signals to videocassette recorder 50 (e.g., using an infrared transmitter) that direct videocassette recorder 50 to start and stop recording at the appropriate times.

During use of the interactive television program guide implemented on set-top box 48, television program listings may be displayed on television 52. Each set-top box 48, videocassette recorder 50, and television 52 may be controlled by one or more remote controls 54 or any other suitable user input interface such as a wireless keyboard, mouse, trackball, dedicated set of buttons, etc.

Communications paths 46 preferably have sufficient bandwidth to allow television distribution facility 38 to distribute scheduled television programming, pay programming, advertising and other promotional videos, and other video information to set-top boxes 44 in addition to non-video program guide and advertising data. Multiple television and audio channels (analog, digital, or both analog and digital) may be provided to set-top boxes 48 via communications paths 46. If desired, program listings and advertising information may be distributed by one or more distribution facilities that are similar to but separate from television distribution facility 38 using communications paths that are separate from communications paths 46.

Certain functions such as pay program purchasing and the remote monitoring of certain users' interactions with the program guide may require set-top boxes 48 to transmit data to television distribution facility 38 over communications paths 46. If desired, such data may be transmitted over telephone lines or other separate communications paths. If functions such as these are provided using facilities separate from television distribution facility 38, some of the communications involving set-top boxes 48 may be made directly with the separate facilities.

A number of suitable techniques may be used to distribute advertising videos. For example, if each path 46 includes a number of traditional analog television channels, one or more of these channels may be used to support a number of digital channels. The bandwidth of each analog channel that is used to support digital channels may support ten or more of such digital channels. If desired, videos may be provided from server 42 in a continuously looped arrangement on these digital channels. Information provided to set-top box 48 may then be used to determine which digital channels to tune to when it is time to display a desired video. Alternatively, videos may be provided on demand. With this approach, set-top box 48 and server 42 negotiate to determine a channel on which to provide the desired video. Videos that originate from main facility 32 or a separate facility are preferably distributed to user television equipment 44 using these or other suitable techniques.

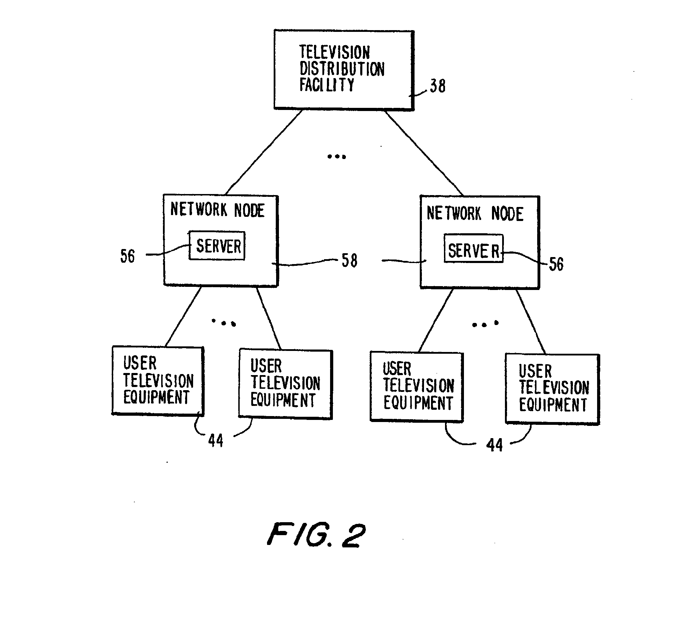

As shown in FIG. 2, the capabilities of server 42 may be provided using servers 56 located at network nodes 58. Servers such as servers 56 may be used instead of server 42 or may be used in conjunction with a server 42 located at television distribution facility.

Graphics information for advertisements may be downloaded periodically (e.g., once per day) to set-top boxes 48 of FIG. 1 and stored locally. The graphics information may be accessed locally when needed by the program guide implemented on set-top box 48. Alternatively, graphics information may be provided in a continuously-looped arrangement on one or more digital channels on paths 46. With such a continuously-looped arrangement, a map indicating the location of the latest graphics information is preferably downloaded periodically to set-top boxes 48 (e.g., once per day). This allows the content on the digital channels to be updated. The program guides on set-top boxes 48 may use the map to locate desired graphics information on the digital channels. Another approach involves using a server such as server 42 or servers 56 (FIG. 2) to provide the graphics information after a set-top box 48 and that server have negotiated to set up a download operation. A bitmap or other suitable set of graphics information may then be downloaded from the server to the set-top box. If desired, the server may download instructions informing the set-top box where the desired graphics information can be located on a particular digital channel. The graphics information can be updated periodically if the server that is responsible for downloading the instructions for informing the set-top box of the location of the graphics information is also updated periodically.

Text information for advertisements may be provided to set-top boxes 48 using the same paths that are used for distributing program guide data. For example, advertising data from database 36 of FIG. 1 may be provided to set-top boxes 48 using link 40, television distribution facility 38, and paths 46. The text information may be stored locally in set-top boxes 48 and updated periodically (e.g., once per day).

Text information, graphics information, and videos for advertisements may also be distributed using a combination of these techniques or any other suitable technique.

Advertising information (whether video, graphics, text, or a combination of video, graphics, and text) is presented to the user based on the user's interactions with the program guide that are indicative of the user's interests. Moreover, various actions may be taken in the program guide in addition to or as an alternative to displaying such targeted advertising. For example, a reminder for a particular program may be set automatically by the program guide when the program guide determines from the user's behavior that the user is interested in that type of program.

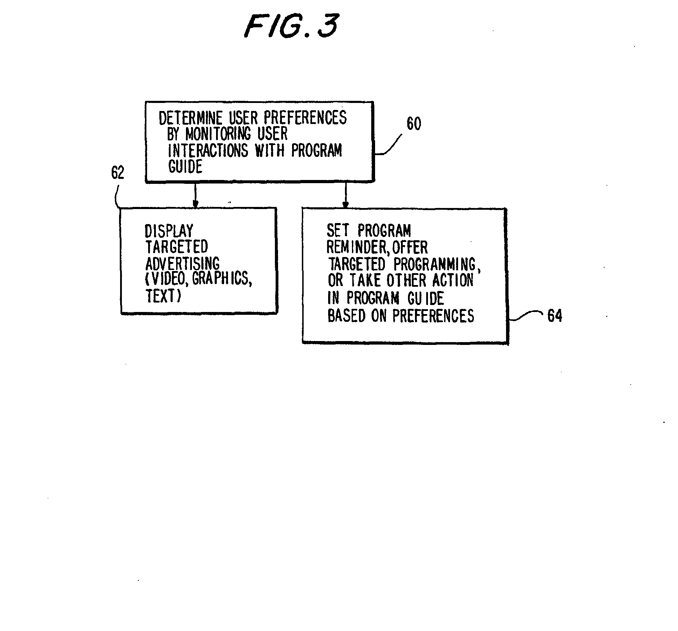

As shown in FIG. 3, the program guide determines the user's interests by monitoring the user's interactions with the program guide at step 60. Any input the user makes with remote control 54 of FIG. 1 or other user input device may be monitored. At step 62, advertising targeted to the user is displayed on the display screen of television 52 in user television equipment 44 based on the user's interests that were identified at step 60. At step 64, a targeted action is taken in the program guide based on the user's interests that were identified at step 60. Examples of suitable targeted program guide actions that may be taken include setting a reminder for a particular program or offering the user an opportunity to purchase a particular pay-per-view program. If desired, the program guide may both display targeted advertising (step 62) and take a suitable targeted action based on the user's interests (step 64).

The steps of FIG. 3 are preferably performed by the program guide implemented on each of set-top boxes 48 in FIG. 1. Certain functions (particularly the display of graphics or videos) may also involve the use of resources located at main facility 32 and television distribution facility 38 and other such facilities. If desired, some of the steps of FIG. 3 may be performed using an application running on set-top boxes 48 other than the interactive program guide. For clarity, the principles of the invention are described in the context of an arrangement in which the set-top-based steps of FIG. 3 are performed primarily using an interactive program guide.

In addition to performing the steps of FIG. 3, a suitable interactive program guide typically provides various features for displaying television program listings information to the user. For example, if the user presses the appropriate buttons on remote control 54, the user may be presented with a time-ordered or channel-ordered grid or table of program guide listings, etc.

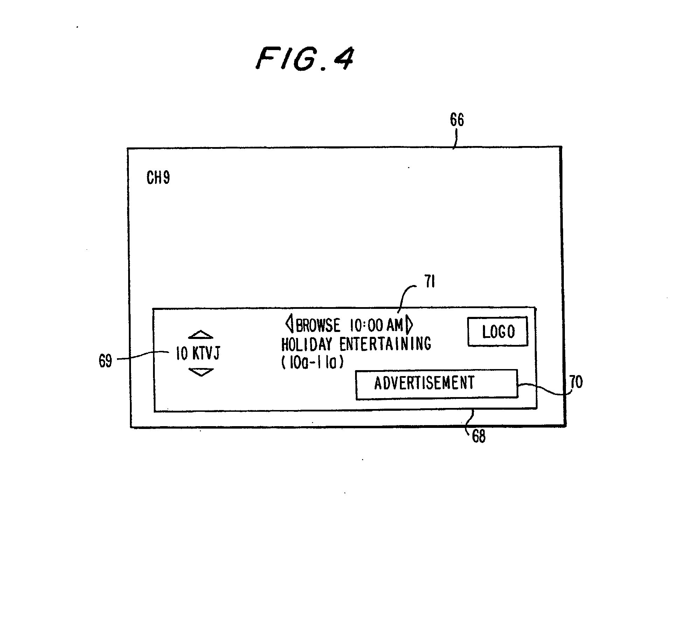

An example of a program guide feature that may be used for browsing television program listings one at a time is shown in FIG. 4. The user watches television (e.g., channel 9 in the example of FIG. 4) on television display screen 66. When the user presses a suitable button on remote control 54 of FIG. 1 (e.g., an up or down cursor key), browse display region 68 is presented. Browse display region 68 contains information on available television programs. In the example of FIG. 4, browse display region 68 indicates that the program "Holiday Entertaining" is scheduled to be broadcast (i.e., televised via cable, satellite, or traditional over-the-air broadcasting) on channel 10 at 10:00 AM. The user can view information regarding the programming on other channels by pressing up or down cursor keys to change the browse channel 69 and may view information regarding the programming at different scheduled broadcast times by pressing left or right cursor keys to change the browse time 71. As the user browses for information on television programs appearing on different television channels and at various broadcast times, the television channel to which the user is tuned (channel 9 in the example of FIG. 4) does not change. Browse display region 68 may contain a targeted advertisement 70 that is targeted to the user based on the user's interests as determined from the user's interactions with the program guide.

Another feature that may be provided is a "reminders" feature. The reminders features allows the user to set a reminder for a television program that the user wishes to watch at a later time. Just before the television program for which a reminder has been set is to be broadcast, a reminder message is displayed on the user's television screen.

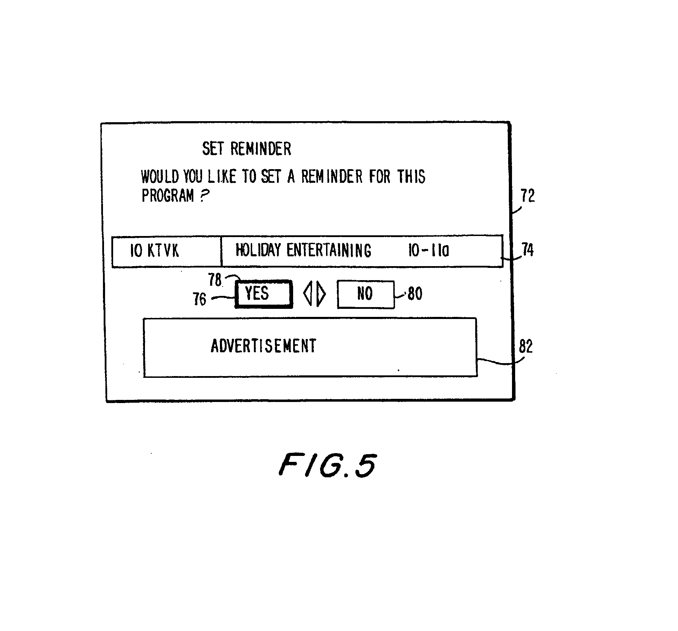

For example, if the user presses an appropriate button (e.g., an "OK" button) after having used the browse feature to navigate to the program listing for "Holiday Entertaining" shown in FIG. 4, the user is presented with set reminder screen 72 of FIG. 5. Set reminder screen 72 allows the user to set a reminder for the selected program 74 (Holiday Entertaining) by selecting yes option 76 with highlight region 78. If the user selects no option 80, set reminder screen 72 is canceled. Set reminder screen 72 may contain an advertisement 82 having content that is targeted to the user based on the user's interactions with the program guide. Set reminder screen 72 and other such screens in the program guide may use either a full-screen or partial-screen display format.

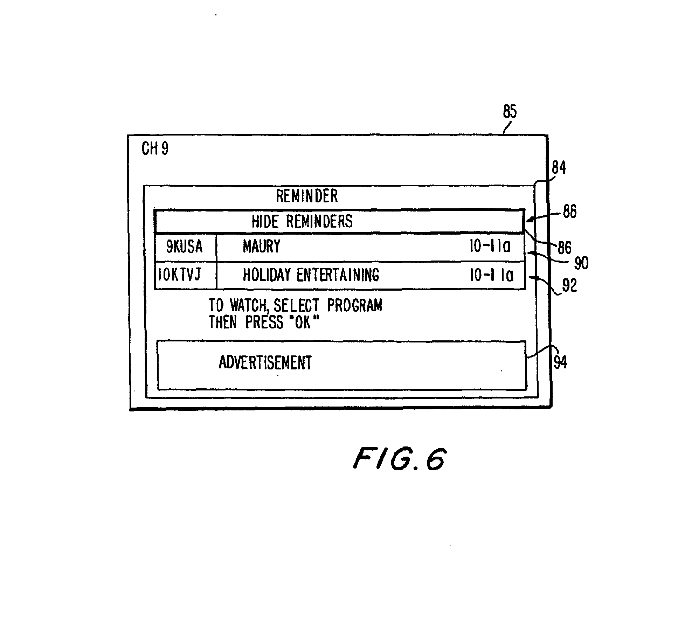

A short while before the scheduled broadcast time of the program for which a reminder has been set, the program guide displays a reminder display region 84 on reminder screen 85, as shown in FIG. 6. Reminder display region 84 may be displayed over the currently displayed television channel (e.g., channel 9). In the example of FIG. 6, two reminders were set for the 10:00 AM time slot. As a result, reminder display region 84 contains program listings for both selected programs. The user may automatically tune to one of the selected programs by moving highlight region 86 from hide reminders option 88 to program listing 90 or program listing 92. When the user presses the "OK" button, set-top box 48 tunes to the channel of the selected program. If the user selects hide reminders option 88, reminder display region 84 is hidden from view. Reminder display region 84 may contain an advertisement 94 that is targeted to the user based on the user's interests as determined from the user's interactions with the program guide.

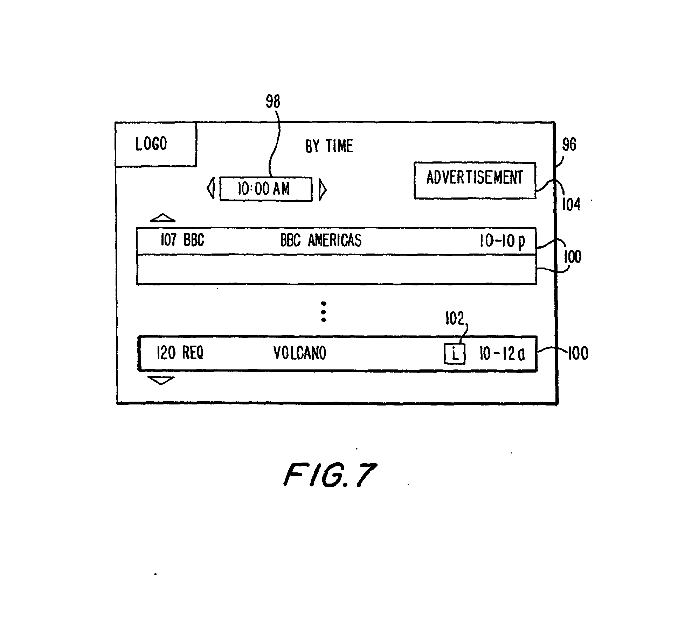

A program guide display feature that allows a user to review program listings for multiple channels for a particular broadcast time is the "by time" listings feature. If the user opts to view program listings arranged by time (e.g., by pressing the appropriate buttons to navigate through various menu options presented by the program guide), the program guide displays by time listings screen 96 of FIG. 7. The user may select a particular time slot 98 that is of interest (e.g., using the left and right cursors). Program listings 100 that are available for the selected time slot are displayed in a channel-ordered list. If additional information is available for a particular program, information icon 102 may be displayed with the listing of that program. By time listings screen 96 may contain an advertisement 104 that is targeted to the user based on the user's interests as determined from the user's interactions with the program guide.

The program guide may display similar program listings screens for various other types of program listings display formats. For example, all programs for a particular channel may be displayed or all programs in a particular category (e.g., sports, movies, etc.) may be displayed.

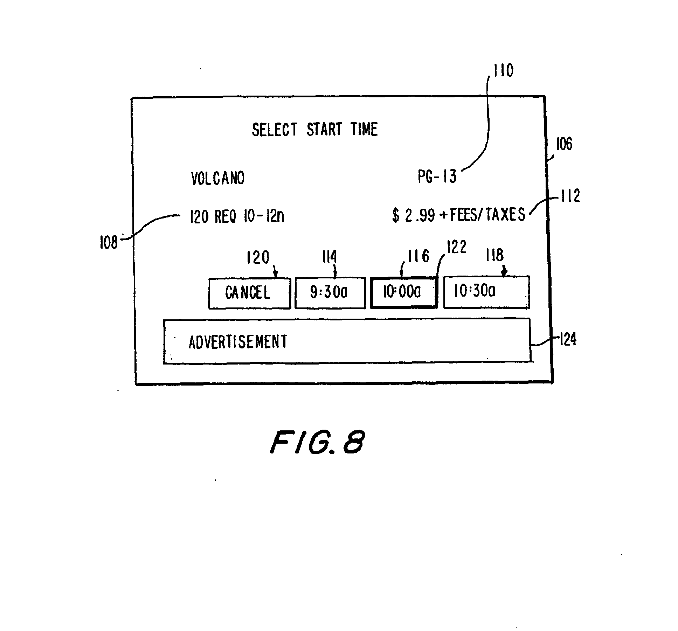

If a user selects a pay-per-view program for ordering from such a display, the program guide displays a pay-per-view ordering page. For example, if the user selects the program entry "Volcano" from the list of programs in FIG. 7, the program guide displays pay-per-view ordering screen 106 of FIG. 8. Pay-per-view ordering screen 106 allows the user to view information on the channel 108 on which the program is scheduled to be broadcast, the rating 110, the price 112, and various available broadcast times 114, 116, and 118. A cancel option 120 allows the user to cancel pay-per-view ordering. The user may select cancel option 120 or a given broadcast time 114, 116, or 118 by placing highlight region 122 on top of the desired option and pressing "OK." Pay-per-view ordering screen 106 may contain an advertisement 124 that is targeted to the user based on the user's interests as determined from the user's interactions with the program guide.

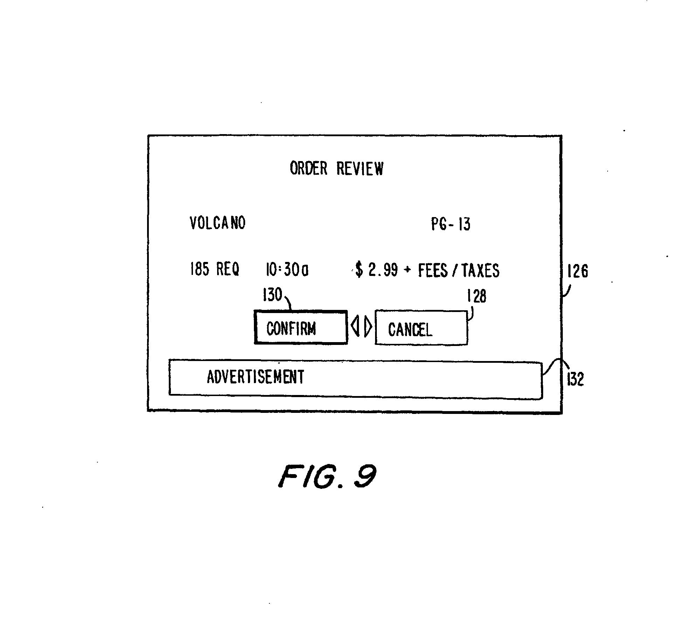

After the user selects a desired broadcast time from pay-per-view ordering screen 106 of FIG. 7, order review screen 126 of FIG. 9 is presented. Order review screen 126 provides the user with information on the program and its selected broadcast time and allows the user to cancel (with option 128) or confirm (with option 130) the order. If the order is confirmed, the selected pay-per-view program will be provided to the user at the scheduled broadcast time. Order review screen 126 may contain an advertisement 132 that is targeted to the user based on the user's interests as determined by the user's interactions with the program guide.

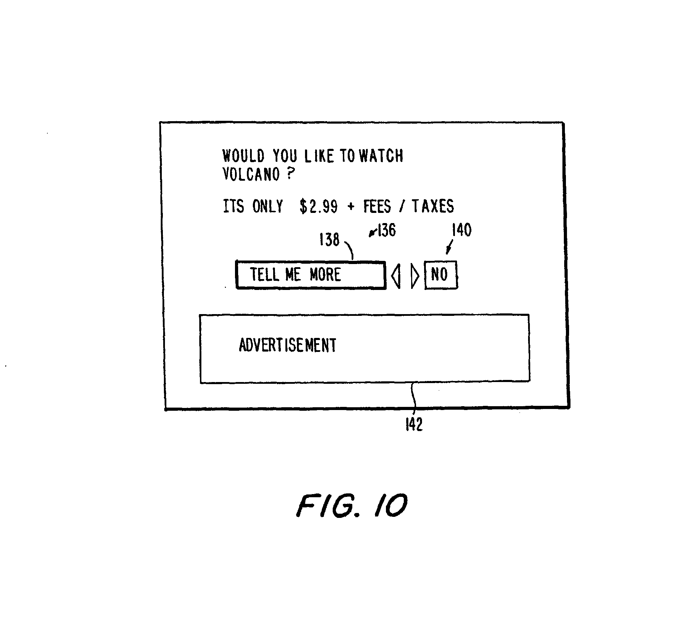

If desired, targeted actions may be taken in the program guide based on a determination of the user's interests from the user's interactions with the program guide. For example, the program guide may offer the user an opportunity to purchase a particular pay-per-view program. If the user's interactions with the program guide indicate that the user is interested in movies of the same type as the movie "Volcano," a targeted pay-per-view ordering screen such as targeted pay-per-view ordering screen 134 of FIG. 10 may be presented. Screen 134 provides the user with an opportunity to order the movie "Volcano" by selecting tell me more option 136 with highlight 138. Selecting tell me more option 136 allows additional information on the content and available broadcast times of the movie to be provided to the user. The user can cancel screen 134 by selecting no option 140. Targeted pay-per-view ordering screen 134 may contain a targeted advertisement 142. If desired, targeted pay-per-view ordering screen 134 may be provided as a partial-screen display overlaid on top of the current television program being watched by the user.

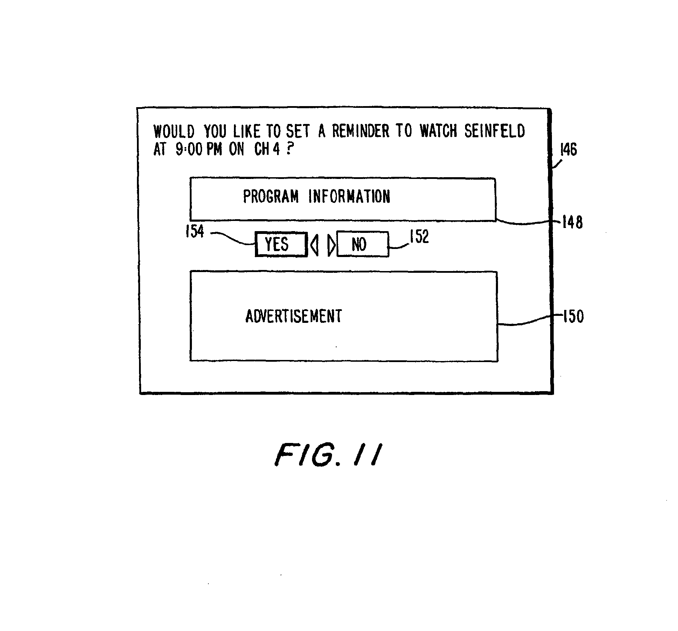

Another type of targeted action that may be taken by the program guide based on a determination of the user's interests involves offering the user an opportunity to set a reminder for a particular television program. For example, if it is determined that a user is interested in television programs such as the program "Seinfeld," then a targeted set-reminders screen such as targeted set reminders screen 146 of FIG. 11 may be displayed. Targeted set reminders screen 146 is automatically presented to the user by the program guide so that the user may set a reminder for "Seinfeld." Targeted set reminders screen 146 may contain a program information display region 148 that contains information such as a program description, ratings information, etc. Targeted set reminders screen 146 may also contain a targeted advertisement 150. The user may cancel targeted set reminders screen 146 by selecting no option 152. The user may set the reminder by selecting yes option 154. If desired, targeted set reminders screen 146 may be presented as a partial-screen display on top of the television channel currently being watched by the user.

A number of different approaches may be used to monitor the user's interactions with the program guide. Every action that the user takes (e.g., every button that is pressed on remote control 54 of FIG. 1 and every corresponding menu option selected by the viewer) may be monitored. The amount of information about the user's interests that the program guide derives from the user's actions depends on the amount of resources it is desired to expend on processing this information. If it is desired to obtain the maximum possible amount of information about the user's interests, every keystroke of the user may be monitored. If such detailed monitoring of the user's actions is too burdensome on the processing capabilities of the program guide, the program guide can be used to monitor a more limited range of the user's actions.

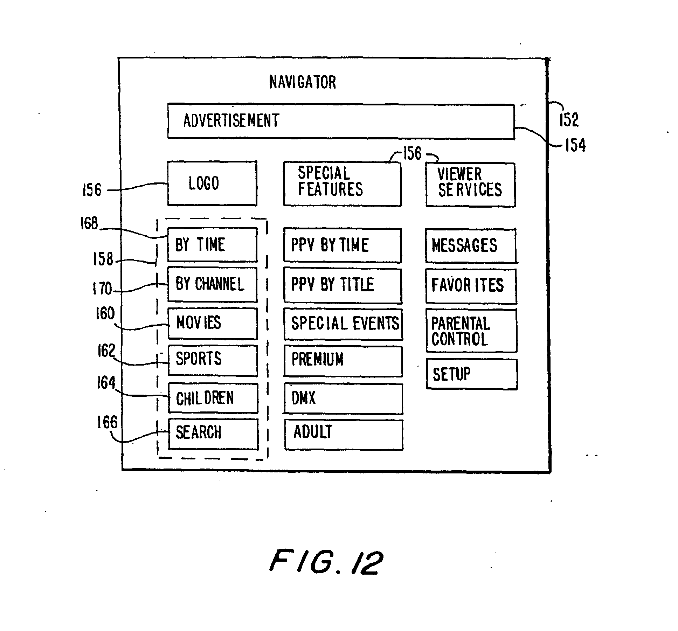

An example of a type of user interaction with the program guide that may be used to determine the user's interests is the user's interactions with the program guide's navigation features. An illustrative program guide navigator is shown in FIG. 12. When the user invokes the program guide navigator, the program guide displays navigator screen 152. (A targeted advertisement 154 may be displayed if desired.) The navigator contains user-selectable options arranged in columns under various headings 156. For example, under a suitable logo, the user may be presented with program listings arrangement options 158. If the user selects a category option such as movies option 160, sports option 162, children option 164, or uses search function 166 to locate programs based on such category information, the program guide can determine that the user is interested in that particular type of service and can present targeted advertising or take a targeted action in the program guide based on that interest. If the user selects by time option 168 and views the program listings for a particular time, the program guide can determine that the user is interested in programming that is scheduled to be broadcast at about that time.

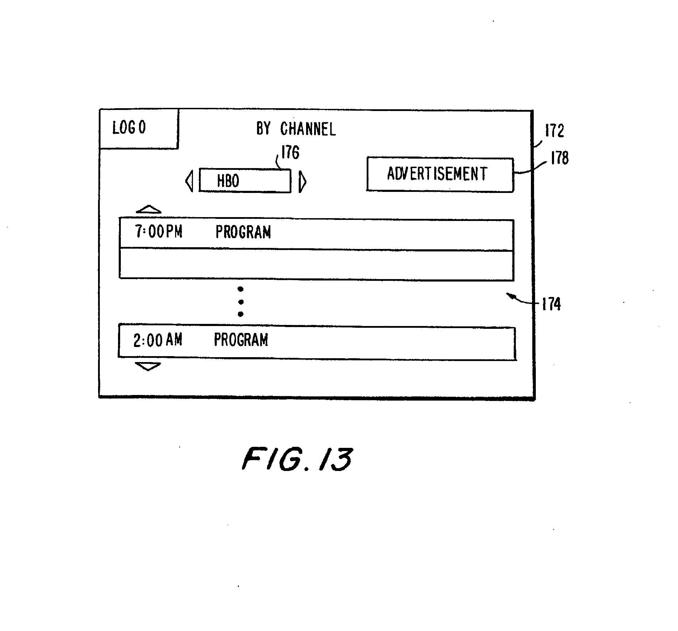

If the user selects by channel option 170 and views information for a particular channel, the program guide can determine that the user is interested in programming that will appear on that channel. An illustrative display screen for by channel option 170 is shown in FIG. 13. By channel screen 172 contains program listings 174 for a selected channel 176. The user can select other channels for which television program guide information is to be displayed using cursor keys. In by channel screen 172, the user has decided to view program listings for the channel "HBO." The program guide can determine that the user is interested in programming for HBO by monitoring whether the user scrolls through the program listings for HBO (e.g., using cursors on the remote control). If desired, a targeted advertisement 178 may be displayed on by channel screen 172.

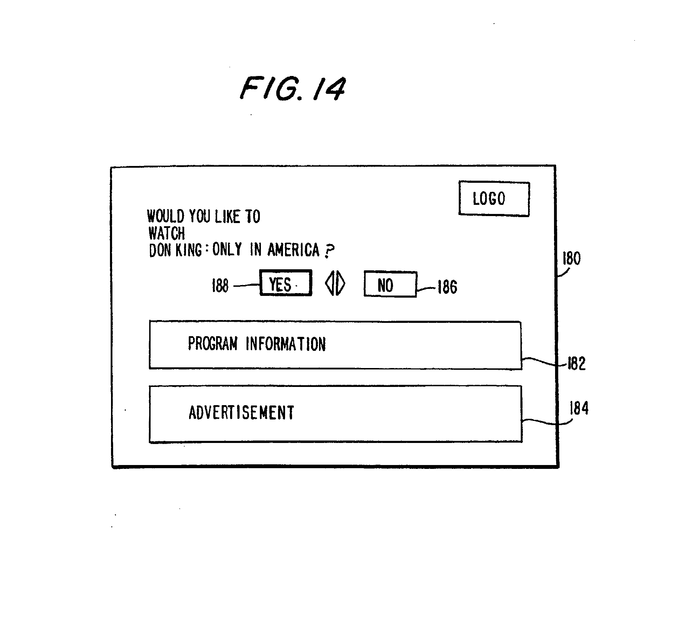

If it is determined that the user is interested in a particular channel (e.g., because the user has scrolled through the listings for that channel and paused for a period of time), the program guide can present appropriate targeted advertising or take an appropriate targeted action in the program guide accordingly. For example, as shown in FIG. 14, the program guide may present a program promotion screen 180 to promote a program that is available on the HBO channel based on the knowledge that the user is interested in television programming on the HBO channel from the user's interaction with the by channel program listings on screen 172 of FIG. 13. Program promotion screen 180 may contain program information 182 and a targeted advertisement 184. If the user selects no option 186, program promotion screen 180 may be cancelled. If the user selects yes option 188, the user may be presented with the opportunity to view more information on the program, set a reminder, etc.

Program promotion screen 180 is an example of an arrangement in which the targeted advertising is presented in the form of an active object. When the user selects an active object (e.g., as when selecting options 186 or 188 in FIG. 14 or otherwise clicking on or indicating a desire to invoke the active object), a suitable action may be taken. The type of action taken by the program guide when the active object is selected depends on the nature of the advertisement. For example, if the active object relates to an advertisement for a product, the user may be presented with options for requesting that information be mailed to the user's home, purchasing the product, or viewing additional product information.

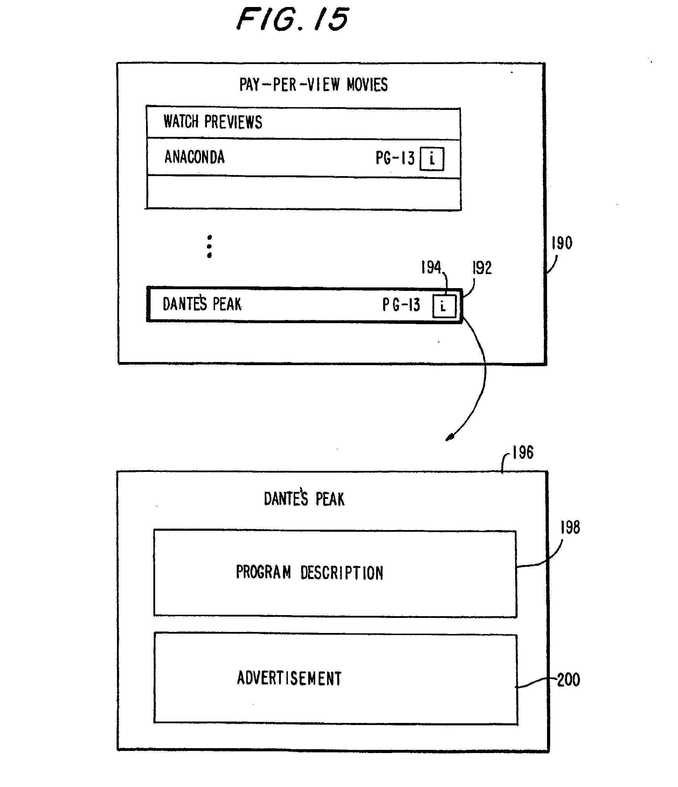

As shown in FIG. 15, if the user views information on pay-per-view movies using pay-per-view movie screen 190, the user may use a highlight to select a desired program listing 192 for which more information is to be provided. An information icon 194 may be used to indicate the availability of such additional information.

Additional information on the selected program may be displayed using pay-per-view program information screen 196, which may contain a program description 198 and a targeted advertisement 200. One way that the program guide can determine a user's interests is by observing when the user requests such additional information. For example, if the user asks for additional information on the movie Dante's Peak, the program guide may determine that the user is interested in movies and, more particularly, movies of the same type as Dante's Peak.

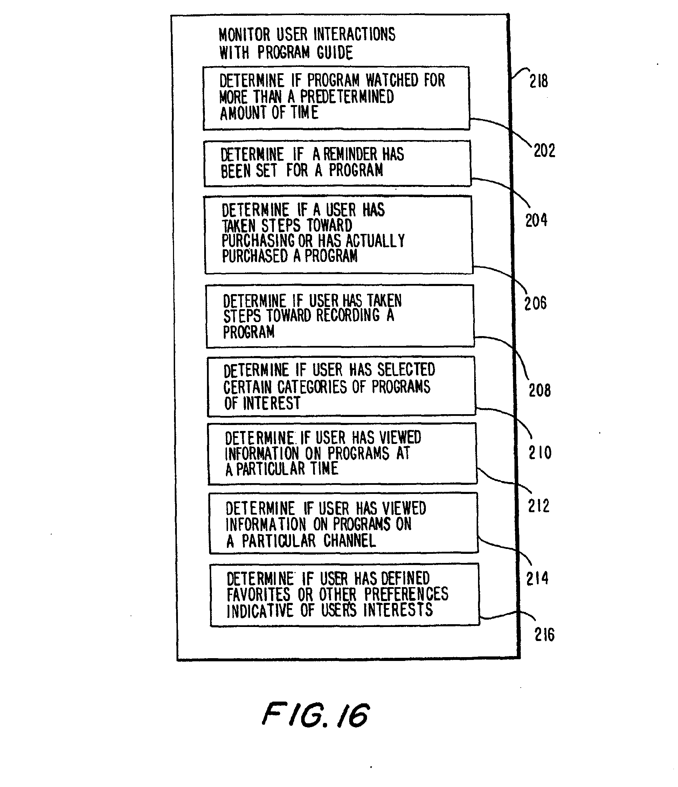

The program guide may monitor the user's interactions using sequential processes, concurrently running processes, processes involving both sequential and concurrent monitoring, or any other suitable processes implemented on set-top box 48 of FIG. 1 or comparable user television equipment. FIG. 16 is a block diagram illustrating some of the processes that may be used when monitoring the user's interactions with the program guide. Process 202 determines if the user has watched a given television program for more than a certain amount of time (e.g., 10 minutes). If the user watches more than this threshold amount, the program guide may assume that the user is relatively interested in subject matter related to the subject matter of the program. Process 204 determines whether a reminder has been set for a given program. If the user sets a reminder, the program guide may assume that the user is interested in subject matter similar to that of the program for which the reminder was set. In process 206, it is determined whether the user has taken steps toward purchasing or has actually purchased a program. Process 208 involves determining whether a user has taken steps toward recording a program. Such steps may be taken by selecting certain program recording menu options presented by the program guide. Process 210 determines whether the user has selected certain categories of programs of interest (e.g., from a navigator menu such as navigator screen 152 of FIG. 12). Process 212 determines whether the user has viewed information on programs that are scheduled to be broadcast at a particular time (e.g., using the by time option of the navigator of FIG. 12). Process 214 determines whether the user has viewed information on programs that are scheduled to be broadcast on a particular channel (e.g., using the by channel option of the navigator of FIG. 12). Process 216 determines whether the user has defined favorites or other preferences indicative of the user's interests. If desired, the program guide may allow each user to establish a profile of various favorite settings and other criteria, as described in commonly-assigned concurrently-filed Ellis et al. U.S. patent application No. 09/034,934, which is hereby incorporated by reference herein. With such an approach, users may establish profiles of preferences such as their favorite channels, preferred genres of programming (sports, comedy, etc.), favorite actors, desired or required ratings, etc. If one of these favorites settings relates to sports, for example, the program guide can use that information to present targeted advertising on sports products or to present the user with an opportunity to purchase a pay-per-view sporting event, etc. The program guide may present targeted advertising or take a targeted program guide action based on any of the preferences defined by the user, a suitable combination of such preferences, etc.

The processes illustrated as part of the monitoring process 218 of FIG. 16 are illustrative only. Any other suitable process for monitoring the interests of the user based on the user's interactions with the program guide may be used if desired.

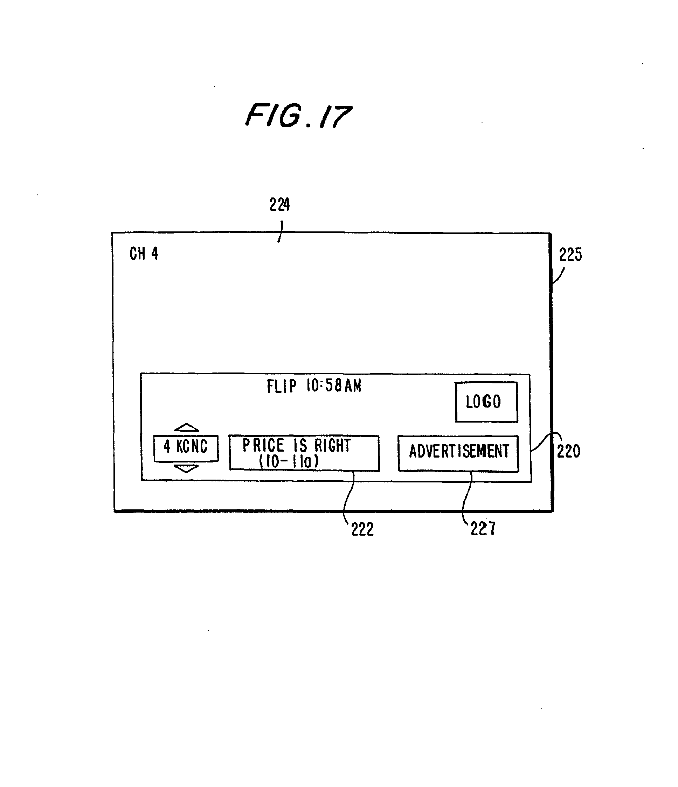

If desired, targeted advertising may be presented as part of a program guide "flip" feature, as shown in FIG. 17. The flip feature of FIG. 17 allows the user to view television program listings information for the television program to which the set-top box 48 is currently tuned. For example, flip display region 220 contains a program listing 222 for the program 224 that is currently being displayed on television screen 225. A targeted advertisement 227 may be displayed at a suitable location in flip display region 220.

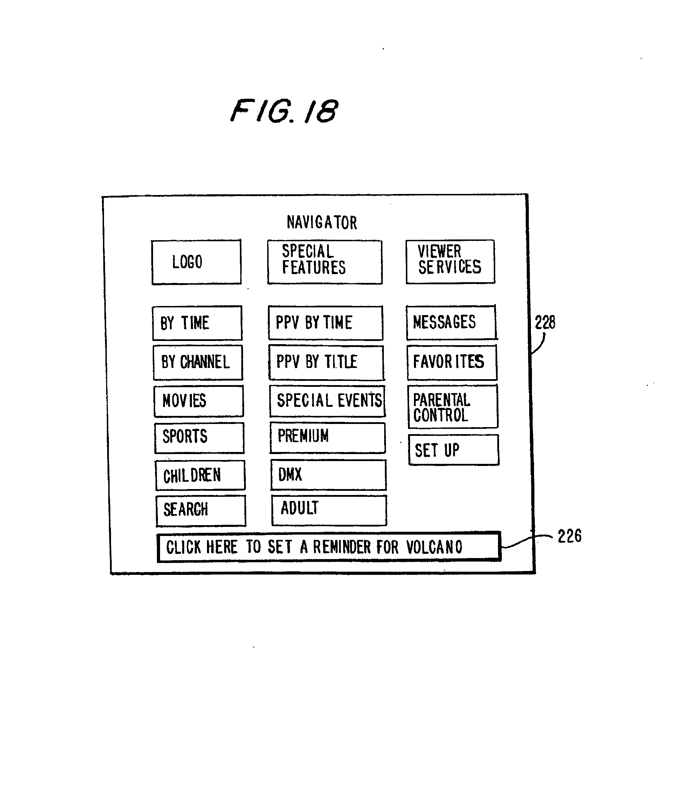

As shown in FIG. 18, a targeted advertisement such as targeted advertisement 226 may be an active object that presents the user with an opportunity to take an action in the program guide such as setting a reminder, ordering a pay-per-view event, etc. If the user selects targeted advertisement 226, the program guide presents the user with a suitable set reminders screen. FIG. 18 also illustrates how such a targeted advertisement may be presented as part of navigator screen 228 if desired.

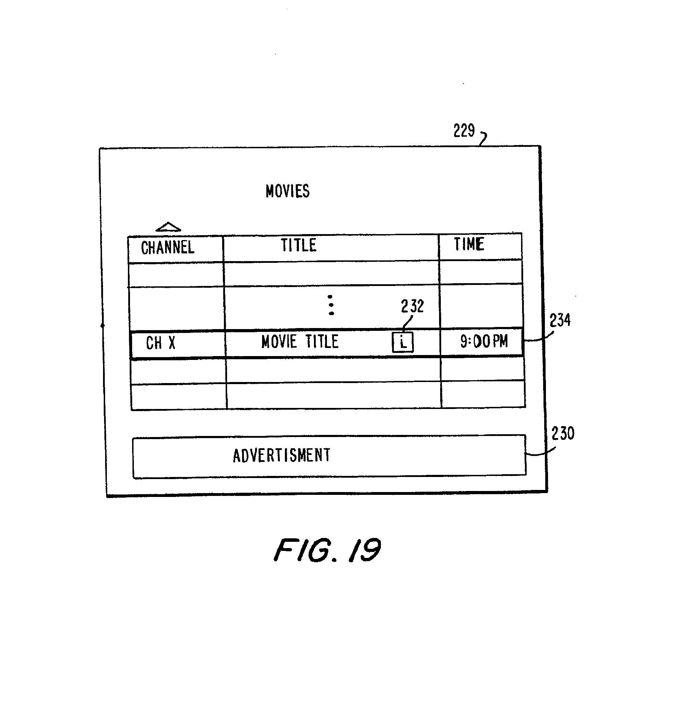

Another location for presenting a targeted advertisement is on a movie listings screen such as movie listings screen 229 of FIG. 19. Targeted advertisement 230, may be, for example, an advertisement for a current movie available on a pay-per-view channel or an advertisement on another movie-related subject.

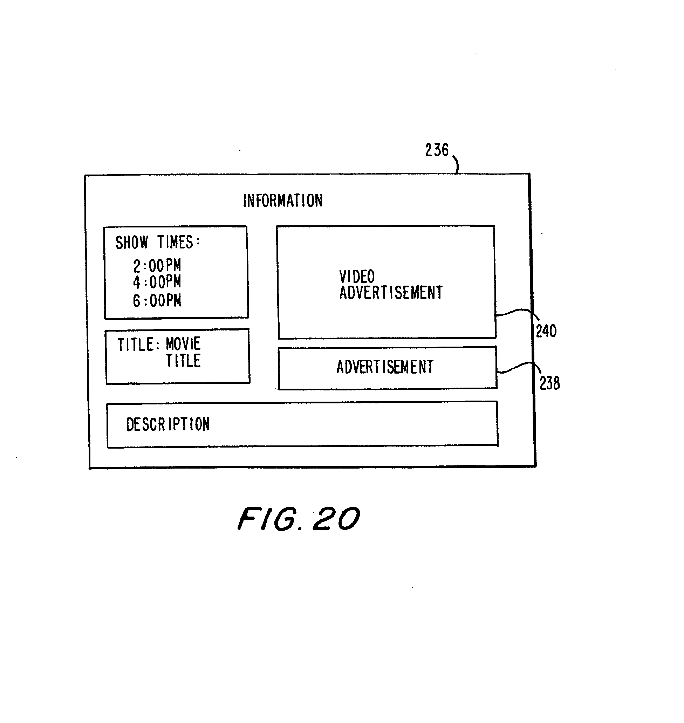

If additional information is available for a given movie, the listing for that movie may be provided with an information icon 232. If the user selects a movie for which additional information is available such as movie 234, the user may be presented with a movie information screen such as movie information screen 236 of FIG. 20. In movie information screen 236, information is presented on the scheduled broadcast times of the movie, the movie title, and a description of the movie. In addition, a targeted advertisement 238 may be presented. If desired, a targeted video advertisement 240 may be provided to display video clips from the selected movie, related promotional videos, or other suitable videos.

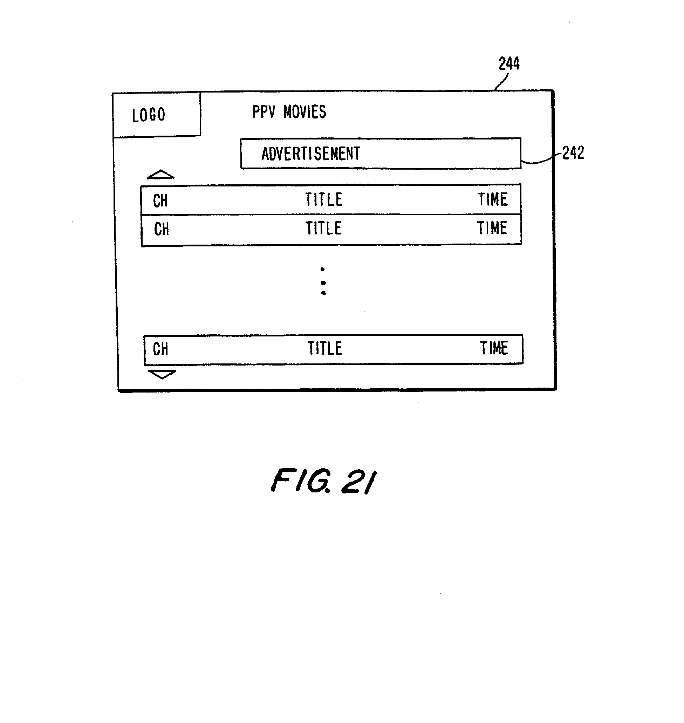

FIG. 21 shows how a targeted advertisement 242 may be presented as part of a pay-per-view movies listings screen 244. It may be desirable for targeted advertisement 242 to contain information on pay-per-view movies, because the user has expressed an interest in such movies by navigating to pay-per-view listings screen 244. Another suitable targeted advertisement might use information on the user's interest in children's programming to present an advertisement for a children's movie.

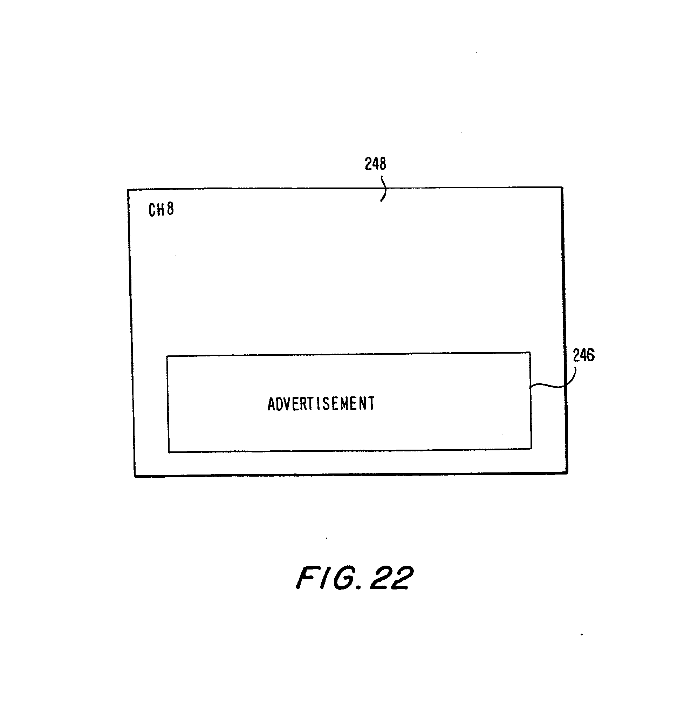

If desired, a targeted advertisement 246 may be displayed over a currently displayed television program 248, as shown in FIG. 22. Such a targeted advertisement may be presented to the user for a fixed time period (e.g., 5 to 10 seconds) or may require the user to actively clear the display (e.g., by pressing a key on the remote control). Targeted advertisement 246 may be presented at a time that is determined to be particularly effective, such as just before a purchased pay-per-view event is to begin or just before a program for which a user set a reminder is to be broadcast.

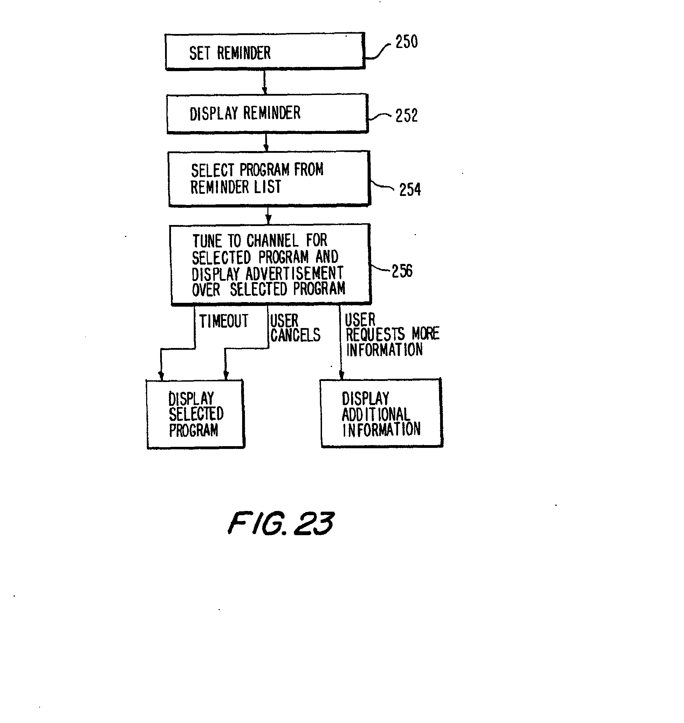

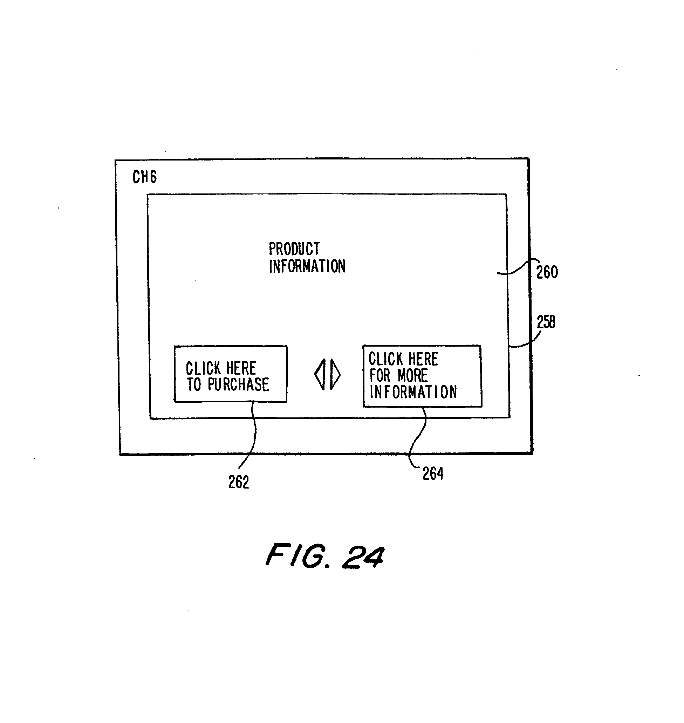

An example of an approach for displaying a targeted advertisement just before a selected program is to be aired is illustrated in the flow chart of FIG. 23. In the approach of FIG. 23, the user sets a reminder for a desired program at step 250. At step 252, the program guide displays a reminder on the user's display screen. The user may select a program from the list of one or more programs contained in the reminder list at step 254. At step 256, the program guide automatically tunes the set-top box to the channel for the selected program and displays an advertisement overlaid on top of the program currently on that channel. If desired, the advertisement may be a targeted advertisement of the type shown in FIG. 22 (or a full-screen equivalent). Alternatively, as shown in FIG. 24, a targeted advertisement 258 may be provided in the form of an active object containing targeted product information 260, selectable purchase option 262, and additional information option 264. If the user chooses selectable purchase option 262, the program guide or another appropriate service implemented on set-top box 48 provides the user with an opportunity to purchase the advertised product (and, if desired, related or unrelated products). If the user selects additional information option 264, the user may be provided with additional product information.

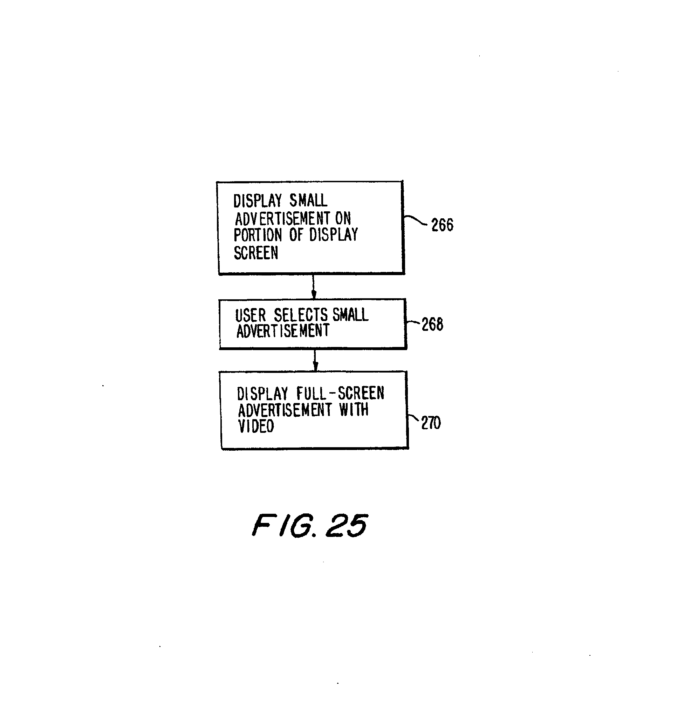

A related approach is illustrated in the flow chart of FIG. 25. After the program guide displays a relatively small targeted advertisement on a portion of the user's display screen at step 266, the user may use the remote control to highlight or otherwise select the displayed advertisement at step 268. The program guide then displays an associated full-screen advertisement with video at step 270.

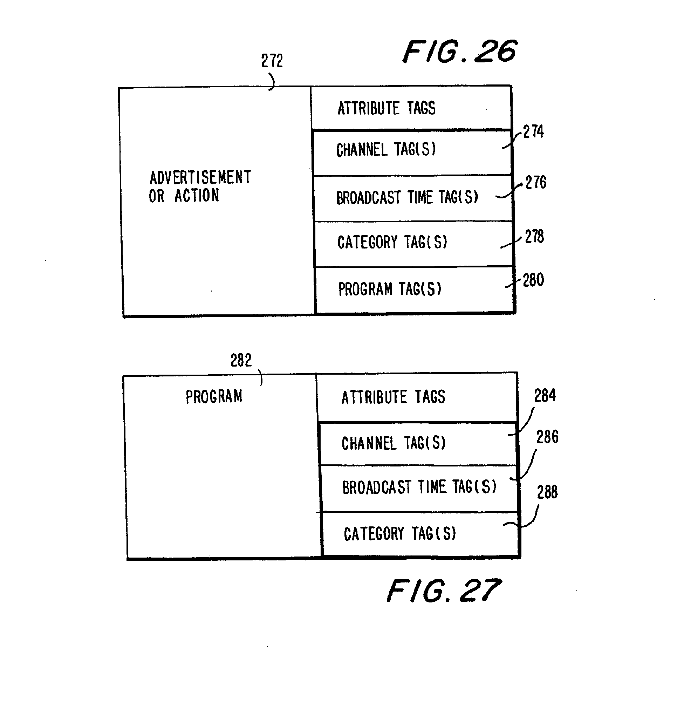

Data structures that may be used to identify the content of targeted advertisements or actions and television programs are shown in FIGS. 26 and 27. As shown in FIG. 26, advertisements or actions such as advertisement or action 272 have associated attribute tags 274, 276, 278, and 280. Channel tags 274 identify which channels relate to the subject matter of advertisement or action 272. For example, if advertisement or action 272 is an advertisement for athletic footwear, channel tags 274 might include the channel identifier information for one or more sports channels. Broadcast time tags 276 identify certain broadcast times which are associated with the subject matter of the advertisement. For example, advertisements for breakfast foods might be associated with time slots in the morning and advertisements for dinner foods might be associated with time slots in the evening. Category tags 278 contain information relating to genres or themes to which the advertisement relates. For example, an advertisement for athletic footwear or a sports-oriented magazine might be associated with the theme "sports" and popcorn might be associated with the theme "movies." Program tags 280 provide information related to specific programs with which the advertisement or action is to be associated. For example, an advertisement for athletic footwear might be associated with the program "Wide World of Sports."

Programs also generally have associated attribute tags, as shown in FIG. 27. Program 282 has one or more associated channel tags 284, one or more broadcast time tags 286, and one or more category tags 288. Channel tags 284 identify the channels associated with program 282 (i.e., the channels on which program 282 is broadcast). Broadcast time tags 286 identify the broadcast times of program 282. Category tags 288 identify the genres with which program 282 is associated (e.g., sports, movies, comedies, children's programming, etc.).

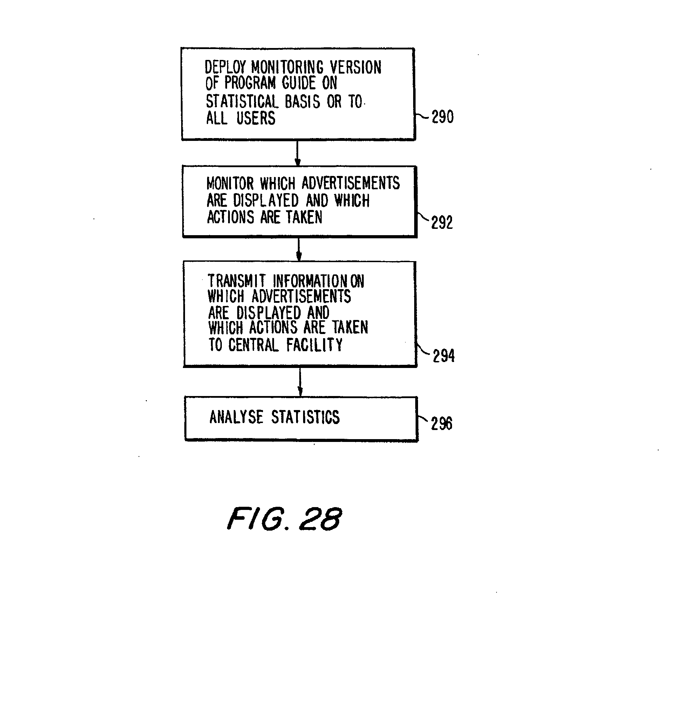

Information concerning which advertisements are viewed by users and which targeted actions are taken in the program guide is important for evaluating the effectiveness of such measures, setting advertising rates, analyzing viewing patterns, etc. Steps involved in monitoring which targeted advertisements are displayed and which targeted actions are taken in the program guide are shown in FIG. 28. At step 290, a cable system operator or other service provider deploys a special monitoring version of the program guide to a statistically sampled subset of subscribers. All subscribers may be provided with such a monitoring version of the program guide if desired. However, providing complete coverage may not be necessary to obtain accurate information and may be unnecessarily burdensome. The special version of the program guide may be deployed by electronically downloading the new version to selected subscribers, replacing the subscribers' set-top boxes with special preprogrammed boxes, or any other suitable technique.

At step 292, the program guides collects information on which targeted advertisements are actually displayed on the user's television and which targeted actions are actually taken in the program guide. The monitoring that takes place during step 292 may occur over a number of days or any other suitable time period. At step 294, each monitoring version of the program guide transmits its information to a central facility (e.g., a facility such as television distribution facility 38 of FIG. 1, main facility 32 of FIG. 1, or some other such suitable facility). Data may be transmitted to the central facility via the return path in a two-way cable link, via modem link, or via any other suitable communications path. Data may be transmitted periodically or when a data transfer is requested from the central facility. The information collected at the central facility is analyzed at step 296. The data analysis may reveal, for example, that certain targeted advertisements are more often viewed than others and that certain targeted program guide actions are taken more often than others. Analysis may also reveal information about the interests of the users.

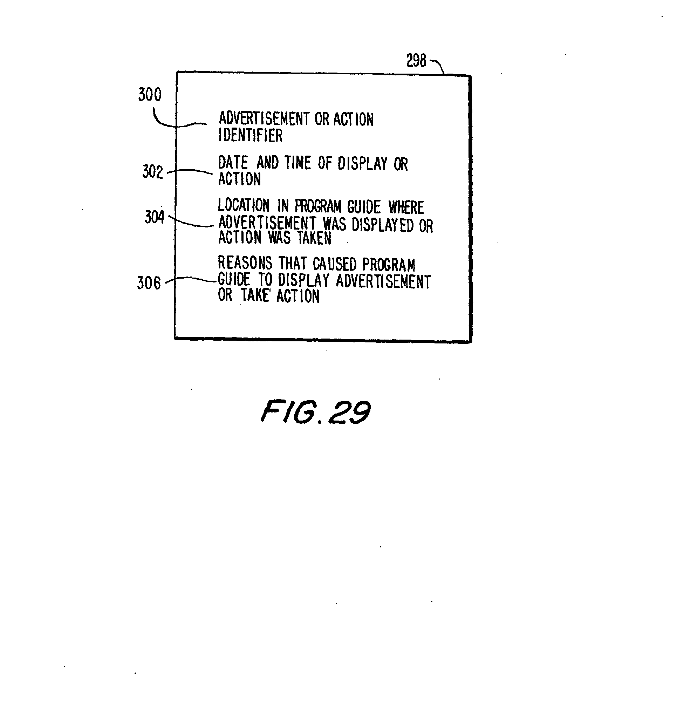

A data record of a type suitable for collecting the monitoring data is shown in FIG. 29. Each such monitoring record 298 may contain an advertisement or action identifier 300 that identifies which advertisement was displayed or which action was taken, date and time information 302 on when the advertisement was displayed or action taken, location information 304 specifying where in the program guide the advertisement was displayed or action taken, and information 306 on the reasons the program guide displayed the advertisement or took the action. The data record format of FIG. 29 is illustrative only. Any other suitable type of data record may be used if desired.

The foregoing is merely illustrative of the principles of this invention and various modifications can be made by those skilled in the art without departing from the scope and spirit of the invention.

## Claims

1. A method for using an interactive television program guide to display program listings information, the method comprising:
displaying, on a display, video for a given television channel; and
displaying over the video for the given television channel, an overlay comprising the program listings information and at least one interactive advertisement.

2. The method of claim 1 wherein displaying the at least one interactive advertisement comprises displaying at least one interactive advertisement containing video.

3. The method of claim 1 wherein displaying the at least one interactive advertisement comprises displaying at least one interactive advertisement containing graphics.

4. The method of claim 1 wherein displaying the at least one interactive advertisement comprises displaying at least one interactive advertisement containing text.

5. The method of claim 1 wherein displaying the at least one interactive advertisement comprises displaying at least one targeted interactive advertisement.

6. The method of claim 1 wherein displaying the at least one interactive advertisement comprises displaying at least one interactive banner advertisement.

7. The method of claim 1 wherein displaying the at least one interactive advertisement comprises displaying at least one interactive advertisement having at least one active object.

8. The method of claim 1 further comprising:
allowing a user to select the at least one interactive advertisement; and
providing additional information to the user upon selection of the at least one advertisement.

9. The method of claim 8 wherein providing additional information comprises allowing the user to set a reminder.

10. The method of claim 8 wherein the interactive advertisement is associated with a product and wherein providing additional information comprises allowing the user to order the product.

11. The method of claim 1 further comprising displaying a logo in the overlay.

12. The method of claim 1 wherein displaying the program listings information comprises displaying at least one program listing.

13. A system in which an interactive television program guide is implemented, wherein the interactive program guide is used to display program listings information, the system comprising:
means for displaying, on a display, video for a given television channel; and
means for displaying over the video for the given television channel, an overlay comprising the program listings information and at least one interactive advertisement.

14. The system of claim 13 wherein the means for displaying the at least one interactive advertisement comprises means for displaying at least one interactive advertisement containing video.

15. The system of claim 13 wherein the means for displaying the at least one interactive advertisement comprises means for displaying at least one interactive advertisement containing graphics.

16. The system of claim 13 wherein the means for displaying the at least one interactive advertisement comprises means for displaying at least one interactive advertisement containing text.

17. The system of claim 13 wherein the means for displaying the at least one interactive advertisement comprises means for displaying at least one targeted interactive advertisement.

18. The system of claim 13 wherein the means for displaying the at least one interactive advertisement comprises means for displaying at least one interactive banner advertisement.

19. The system of claim 13 wherein the means for displaying the at least one interactive advertisement comprises means for displaying at least one interactive advertisement having at least one active object.

20. The system of claim 13 further comprising:
means for allowing a user to select the at least one interactive advertisement; and
means for providing additional information to the user upon selection of the at least one advertisement.

21. The system of claim 20 wherein the means for providing additional information comprises means for allowing the user to set a reminder.

22. The system of claim 20 wherein the interactive advertisement is associated with a product and wherein the means for providing additional information comprises means for allowing the user to order the product.

23. The system of claim 13 further comprising means for displaying a logo in the overlay.

24. The system of claim 13 wherein the means for displaying the program listings information comprises means for displaying at least one program listing.

25. A system in which an interactive television program guide is implemented, wherein the interactive program guide is used to display program listings information, the system comprising:
a display; and
user television equipment configured to:
display, on the display, video for a given television channel, and
display, over the video for the given television channel, an overlay comprising the program listings information and at least one interactive advertisement.

26. The system of claim 25 wherein the at least one interactive advertisement contains video.

27. The system of claim 25 wherein the at least one interactive advertisement contains graphics.

28. The system of claim 25 wherein the at least one interactive advertisement contains text.

29. The system of claim 25 wherein the at least one interactive advertisement comprises at least one targeted interactive advertisement.

30. The system of claim 25 wherein the at least one interactive advertisement comprises at least one interactive banner advertisement.

31. The system of claim 25 wherein the at least one interactive advertisement has at least one active object.

32. The system of claim 25 wherein the user television equipment is further configured to:
allow a user to select the at least one interactive advertisement; and
provide additional information to the user upon selection of the at least one advertisement.

33. The system of claim 32 wherein the additional information comprises an ability to allow the user to set a reminder.

34. The system of claim 32 wherein the interactive advertisement is associated with a product and wherein the additional information comprises an ability to allow the user to order the product.

35. The system of claim 25 wherein the user television equipment is further configured to display a logo in the overlay.

36. The system of claim 25 wherein the program listings information comprises at least one program listing.

37. Machine-readable media for use in an interactive television program guide system in which an interactive television program guide that displays program listings information is implemented on user television equipment, wherein the media is encoded with machine-readable instructions for performing the method comprising:
displaying, on a display, video for a given television channel; and
displaying over the video for the given television channel, an overlay comprising the program listings information and at least one interactive advertisement.

38. The machine-readable media of claim 37 wherein displaying the at least one interactive advertisement comprises displaying at least one interactive advertisement containing video.

39. The machine-readable media of claim 37 wherein displaying the at least one interactive advertisement comprises displaying at least one interactive advertisement containing graphics.

40. The machine-readable media of claim 37 wherein displaying the at least one interactive advertisement comprises displaying at least one interactive advertisement containing text.

41. The machine-readable media of claim 37 wherein displaying the at least one interactive advertisement comprises displaying at least one targeted interactive advertisement.

42. The machine-readable media of claim 37 wherein displaying the at least one interactive advertisement comprises displaying at least one interactive banner advertisement.

43. The machine-readable media of claim 37 wherein displaying the at least one interactive advertisement comprises displaying at least one interactive advertisement having at least one active object.

44. The machine-readable media of claim 37 further encoded with machine-readable instructions for performing the method comprising:
allowing a user to select the at least one interactive advertisement; and
providing additional information to the user upon selection of the at least one advertisement.

45. The machine-readable media of claim 44 wherein providing additional information comprises allowing the user to set a reminder.

46. The machine-readable media of claim 44 wherein the interactive advertisement is associated with a product and wherein providing additional information comprises allowing the user to order the product.

47. The machine-readable media of claim 37 further encoded with machine-readable instructions for performing the method comprising displaying a logo in the overlay.

48. The machine-readable of claim 37 wherein displaying the program listings information comprises displaying at least one program listing.

49. A system in which an interactive television program guide is implemented on user television equipment comprising:
means for monitoring a user's interactions with the interactive television program guide to determine the user's interests; and
means for presenting targeted advertising to the user with the interactive television program guide based on the user's interests.

50. A method for displaying targeted advertising using an interactive television program guide implemented on user television equipment, comprising the steps of:
monitoring a user's interactions with the interactive television program guide to determine the user's interests; and
presenting targeted advertising to the user with the interactive television program guide based on the user's interests.

51. A system in which an interactive television program guide is implemented on user television equipment, comprising:
means for monitoring a user's interactions with the interactive television program guide to determine the user's interests; and
means for taking a targeted action in the interactive television program guide based on those interests.

52. A method for taking targeted actions in an interactive television program guide implemented on user television equipment, comprising the steps of:
monitoring a user's interactions with the interactive television program guide to determine the user's interests; and
taking a targeted action in the interactive television program guide based on those interests.

53. A system in which an interactive television program guide is implemented on user television equipment, comprising:
means for monitoring a user's interactions with the interactive television program guide to determine the user's interests; and
means for displaying targeted advertising based on the user's interests with the program guide; and
means for monitoring which advertisements are displayed by the program guide; and
means for transmitting information on which advertisements are displayed to a central facility.

54. A method for using an interactive television program guide implemented on user television equipment to monitor the effectiveness of targeted advertising, comprising the steps of:
monitoring a user's interactions with the interactive television program guide to determine the user's interests; displaying targeted advertising based on the user's interests with the program guide.

55. A method for using an interactive television program guide implemented on user television equipment, comprising the steps of:
monitoring a user's interactions with the interactive television program guide to determine the user's interests;
taking targeted actions in the program guide based on the user's interests;
monitoring which targeted actions are taken in the program guide based on the user's interest; and
transmitting information on which targeted actions are taken to a central facility.

56. A system in which an interactive television program guide is implemented on user television equipment, comprising:
means for monitoring a user's interactions with the interactive television program guide to determine the user's interests;
means for taking targeted actions in the program guide based on the user's interests;
means for monitoring which targeted actions are taken by the program guide; and
means for transmitting information on which targeted actions are taken by the program guide to a central facility.
